# FASCICULE DE BREVET EUROPEEN

(11) **EP 0 804 995 B1**
(45) Date de publication et mention de la délivrance du brevet: **05.06.2002**
(21) Numéro de dépôt: 97400974.8
(22) Date de dépôt: 30.04.1997
(51) Int. Cl.: B23P 19/04, F01D 25/28

(54) **Outillage de montage d'un distributeur de turbomachine**
Werkzeug zum Montieren von Statorsegmenten einer Turbomaschine
Tool for assembling a stator ring of a turbomachine

(30) Priorité: 02.05.1996 FR 9605486
(43) Date de publication de la demande: 05.11.1997
(73) Titulaire: SNECMA MOTEURS, 75015 Paris (FR)
(72) Inventeur: Guerin, Jacques Georges Philippe, 91800 Boussy St Antoine (FR); Trecan, Pierre Ange Jean Antoine, 91230 Montgeron (FR)

(56) Documents cités:
- EP-A- 0 334 794
- US-A- 3 849 023
- US-A- 5 232 340
- US-A- 5 316 202

## Description

L'invention a trait à un outillage de montage d'un distributeur de turbomachine.

Les distributeurs de turbomachine sont des agencements en cercle d'aubes fixes disposées devant des aubes liées au rotor, notamment dans les turbines à basse pression, et dont la fonction est d'assurer un redressement convenable de l'écoulement des gaz du moteur pour accroître le rendement de celui-ci.

Ces distributeurs sont en pratique composés de secteurs juxtaposés s'étendant chacun sur un arc de cercle, et des plaquettes d'étanchéité s'étendent entre les secteurs pour interdire autant que possible les fuites de gaz.

L'origine de l'invention est à attacher à la création d'une forme particulière de secteurs de distributeur : leur bord radialement extérieur est muni d'un côté d'une saillie circulaire s'étendant en direction axiale, et de l'autre côté d'une saillie circulaire s'étendant en direction radiale ; ces saillies, appelées béquets, sont destinées à assurer le montage des secteurs de distributeur dans le carter de la turbomachine, qui est muni pour cela d'une lèvre axiale contre laquelle s'appuie le premier béquet et d'une lèvre radiale contre laquelle s'appuie le second béquet. Cependant, il est impossible de faire entrer les béquets dans les logements délimités par les lèvres par un mouvement simple, si bien qu'il est impossible de procéder à un montage à la main, comme on le faisait avec des secteurs de distributeurs de forme plus simple.

L'invention est relative à un outillage qui soit apte à monter sans difficulté ce genre de secteurs de distributeur dans leurs emplacements du carter de turbomachine après les avoir saisis ; il peut aussi servir à démonter ce distributeur par des opérations inverses, ainsi qu'il deviendra évidement dans la suite de cet exposé.

Pour résumer, l'invention est relative à un outillage de montage de distributeur de turbomachine, formé de secteurs adjacents en arc de cercle, dans un carter de turbine pourvu de deux logements annulaires ; un premier des logements, situé d'un côté effilé du carter, est délimité par une première lèvre du carter, qui s'étend axialement à l'opposé du côté effilé ; un second des logements, situé d'un côté épanoui du carter, est délimité par une seconde lèvre du carter, qui s'étend radialement vers l'intérieur ; les secteurs comprennent, sur une portion radialement extérieure, un premier béquet, qui s'engage dans le premier logement et s'étend axialement vers le côté effilé quand le distributeur est monté dans le carter, et un second béquet qui s'engage dans le second logement et s'étend radialement vers l'extérieur quand le distributeur est monté dans le carter ; l'outillage est caractérisé par :
- un plateau circulaire,
- des unités de montage des secteurs, associées respectivement aux secteurs du distributeur et comprenant chacune :
   - un support de secteur,
   - un mécanisme de suspension du support de secteur au plateau circulaire,
   - et un mécanisme de commande de basculement du support de secteur disposé entre le support de secteur et le plateau circulaire, permettant d'incliner le secteur porté par le support.

Dans la conception retenue actuellement, le mécanisme de suspension comprend une paire de bielles articulées au support de secteur ; l'une des bielles est aussi articulée au plateau et l'autre des bielles est aussi articulée à un organe, commun à toutes les unités de montage, du mécanisme de commande de basculement.

Un mécanisme de commande particulièrement simple pour le basculement comprend un écrou vissé sur un axe fileté du plateau, et une couronne tournant dans l'écrou autour de l'axe fileté : cette couronne n'est autre que l'organe commun précité.

Pour amorcer le montage, il est utile d'abaisser d'un mouvement précis les supports de secteur ; l'outillage peut comprendre pour cela un plan sur lequel le carter est posé et auquel le plateau est suspendu par un mécanisme abaisseur, pouvant consister en un second écrou vissé sur l'axe fileté et posé sur un mandrin du socle, l'axe coulissant le long du mandrin avec une liaison d'arrêt de rotation.

La suspension des supports de secteur doit être souple pendant l'introduction des saillies des secteurs dans les logements délimités par les lèvres du carter, mais cette souplesse n'est pas vraiment favorable auparavant, notamment quand les secteurs préalablement rangés doivent être saisis par les supports, et c'est pourquoi il est avantageux d'ajouter un mécanisme d'inhibition d'articulation, pouvant être relâché, qui relie au plateau circulaire les bielles articulées à celui-ci et les immobilise temporairement. Une conception simple pour ce mécanisme d'inhibition d'articulation est un mécanisme à détente et recul qui impose un basculement des bielles radialement vers l'intérieur quand il est relâché par l'action d'un ressort par exemple.

L'outillage peut comprendre un plan de pose des secteurs de distributeur selon une disposition sensiblement identique à leur disposition de montage dans le carter : cela permet d'assembler manuellement le distributeur avant de prendre ses segments par les unités de montage.

Enfin, l'outillage peut faciliter aussi le montage des roues de rotor situées derrière les distributeurs, une fois ceux-ci montés : il s'agit d'éléments, tels qu'un anneau de retenue, dont l'effet est de retenir des segments d'étanchéité posés dans le carter près du distributeur et qui s'étendent autour de la roue du rotor ; on élimine ainsi tout risque que ces segments d'étanchéité ne se déplacent pendant l'insertion de la roue. _Une étape préliminaire à l'installation de l'anneau de retenue peut être effectuée si des patins, mobiles en direction radiale, sont prévus sur l'outillage et disposés de façon à plaquer les segments d'étanchéité sur le carter, avant que les unités de montage ne relâchent les secteurs de distributeur et que l'outillage ne soit retiré.

L'invention va maintenant être décrite plus en détail à l'aide des figures suivantes, annexées à titre illustratif et non limitatif :
- la figure 1 représente un outil de montage préliminaire des secteurs de distributeur,
- la figure 2 représente plus spécialement l'outil par lequel les secteurs sont saisis et portés au carter de turbomachine jusque dans leur position de montage définitif,
- la figure 3 est un détail des unités de montage de l'outil,
- la figure 4 est un autre détail de ces unités de montage,
- la figure 5 est une vue de dessus de l'outil de la figure 2,
- la figure 6 est une illustration d'un secteur de distributeur monté dans une turbine,
- et la figure 7 est une vue plus générale de la turbine.

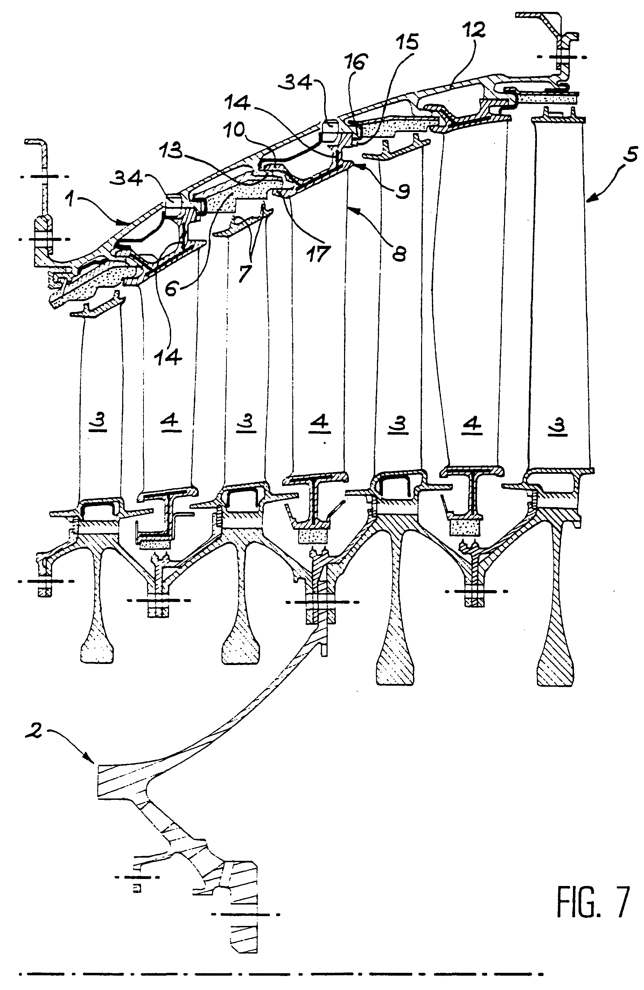

Une demi-coupe longitudinale d'une turbine de turbomachine est représentée à la figure 7 : un carter 1 de turbine à basse pression d'une turbomachine s'effile vers l'avant, c'est-à-dire ici vers la gauche de la figure, et s'épanouit vers l'arrière, à droite ; il renferme un rotor 2, et des roues de rotor 3 formées d'un cercle d'aubes de détente alternent avec des distributeurs fixes 4 dans la veine annulaire 5 intermédiaire entre le carter 1 et le rotor 2. De façon connue, l'étanchéité au niveau des roues de rotor 3 est assurée par des segments en arc de cercle de matière dite abradable 6, c'est-à-dire d'érosion facile et qui peut être creusée par des crêtes appelées léchettes 7 de forme circulaire établies au bout des roues de rotor 3, et qui atteignent l'abradable 6 et le creusent aux conditions normales de service, quand l'échauffement plus important du rotor 2 y a produit des déformations thermiques plus importantes. Il ne subsiste alors qu'un jeu très étroit entre léchettes 7 et abradable 6.

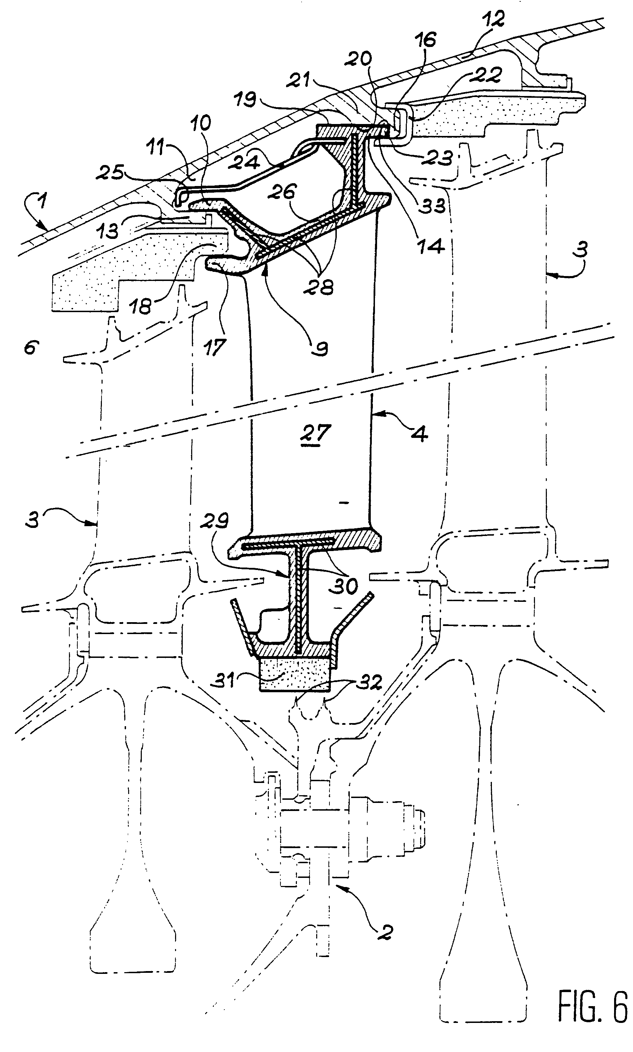

Les distributeurs 4 sont formés de secteurs 8 adjacents, qui s'étendent chacun sur une fraction de circonférence et sont tous identiques : on s'intéressera surtout à leur pied 9, c'est-à-dire à leur partie d'union au carter 1 et sur laquelle on peut distinguer plusieurs éléments importants, en s'aidant aussi de la figure 6.

Un premier béquet 10 constitue une saillie d'orientation axiale et dirigée vers le côté effilé du carter 1 quand le montage est réalisé ; il pénètre dans un premier logement 11 du carter 1, délimité par une peau extérieure 12 de celui-ci et par une lèvre axiale 13, dirigée vers le côté épanoui ; cette lèvre axiale a un diamètre immédiatement inférieur à celui du premier béquet 10 pour lui permettre de s'appuyer sur elle. Un second béquet 14, situé du côté épanoui du carter 1 au moment du montage, est dirigé radialement vers l'extérieur, et il s'appuie par une surface latérale 15 située vers le côté épanoui du carter 1 contre une lèvre radiale 16, s'étendant vers l'intérieur, de celui-ci. Ainsi, l'ajustement du premier béquet 10 interdit les mouvements radiaux du secteur 8 vers l'intérieur et celui du second béquet 14 interdit les mouvements vers l'arrière. -Le montage du distributeur 4 est complété par d'autres appuis : c'est ainsi que les secteurs 8 possèdent un troisième béquet 17, parallèle au premier béquet 10 et qui s'appuie en direction radiale contre une extrémité 18 de la couche d'abradable 6 située immédiatement en avant ; et le second béquet 14 s'appuie aussi par une surface radialement extérieure 19 contre une portée circulaire 20 d'une nervure de jonction 21 unissant la seconde lèvre 16 à la peau 12 du carter 1. Ces deux appuis interdisent les mouvements radiaux vers l'extérieur des secteurs 8 du distributeur 4. On doit encore mentionner que chaque couche d'abradable 6 est munie d'une agrafe 22 à son extrémité avant et qui s'ouvre vers l'avant, pour emprisonner la seconde lèvre 16 et la recouvrir complètement, ainsi qu'une portion d'extrémité arrière 23 du second béquet 14, qui est alors retenue contre les mouvements radiaux vers l'intérieur. Enfin, un bouclier thermique 24 est encastré dans le second béquet 14 et s'étend autour du pied 9 du secteur 8 jusque devant la premier béquet 10 ; son extrémité libre 25 touche la peau 12 du carter 1.

Le pied 9 comprend encore un anneau de liaison 26 qui relie les béquets 10 et 17 d'avant au béquet 14 d'arrière et porte les aubes 27 ; comme l'étanchéité doit être rétablie entre les secteurs 8 adjacents, des rainures sont prévues sur les faces latérales des pieds 9, le long de l'anneau de liaison 26 et des premier et second béquets 10 et 14, dans lesquelles on introduit des bords de plaquettes d'étanchéité 28 qui couvrent les interstices de secteurs 8 adjacents. On retrouve des plaquettes d'étanchéité 30 analogues entre secteurs 8 adjacents au niveau de l'extrémité, dirigée vers le rotor 2, des aubes 27, entre des portions adjacentes d'un anneau de liaison d'extrémité libre 29 qui unissent les aubes 27 d'un même secteur 8.

Mentionnons pour finir que l'anneau de liaison d'extrémité libre 29 porte lui aussi une couche d'abradable 31 que frottent des léchettes 32 appartenant au rotor 2.

La partie la plus délicate du montage consiste donc à introduire respectivement le premier et le second béquets 10 et 14 dans le logement 11 et un logement 33 délimité par la seconde lèvre 16 et la portée circulaire 20, ce qui n'est pas possible par un mouvement purement axial dans le carter 1 car la seconde lèvre 16 entoure une ouverture de diamètre inférieur au diamètre externe du second béquet 14, à la surface extérieure 19. Pourtant, tous les secteurs 8 en arc de cercle doivent être montés à la fois sous peine d'arracher les plaquettes d'étanchéité 28 et 30 de leur rainure ; et il faut tenir compte de la présence de pions 34 d'arrêt en rotation (figure 7), engagés en direction radiale à travers le carter 1 ainsi que dans des évidements correspondants de pieds 9, à l'emplacement des seconds béquets 14 afin d'empêcher les secteurs 8 de tourner, car les secteurs 8 doivent être aussi montés à une position angulaire précise sur la circonférence du carter 1. Ces nécessités d'assurer une mise en position précise et délicate tout en montant tous les secteurs 8 à la fois rendent un montage manuel direct impossible.

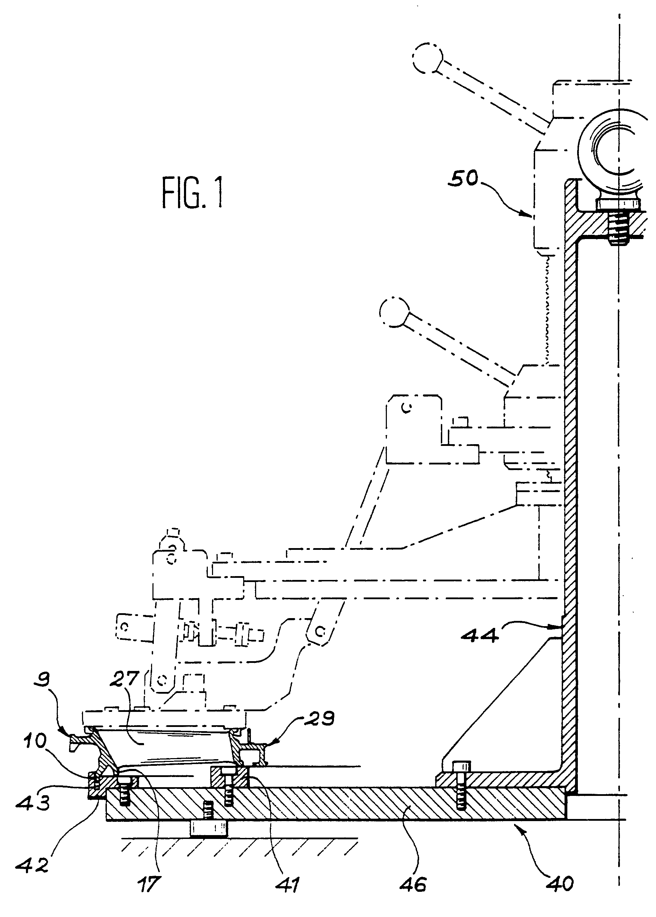

L'outillage avec lequel ce problème de montage est résolu comprend tout d'abord un plan de montage 40 du distributeur 4, représenté à la figure 1, - hors du carter 1. Ce plan de montage 40 est circulaire et illustré en demi-coupe ; il comprend deux couronnes concentriques 41 et 42 vissées sur un disque 46 ; les secteurs 8 sont posés sur la première couronne 41 par leur anneau de liaison d'extrémité libre 29 et sur la seconde couronne 42 par le pied 9, et plus précisément par le troisième béquet 17 et par le premier béquet 10 ; ce dernier s'engage dans une gorge 43 creusée dans la seconde couronne 42, ce-qui place les secteurs 8 à la bonne inclinaison pour le montage, et dans une disposition réciproque analogue à celle qu'ils prennent une fois montés dans le carter 1. Les plaquettes d'étanchéité 28 et 30 sont glissées dans les rainures aux bords latéraux de secteurs 8 et maintenues en place avec une légère adhérence par de la graisse ; des cales non représentées peuvent être glissées entre les secteurs 8 adjacents pour les maintenir à l'écartement voulu.

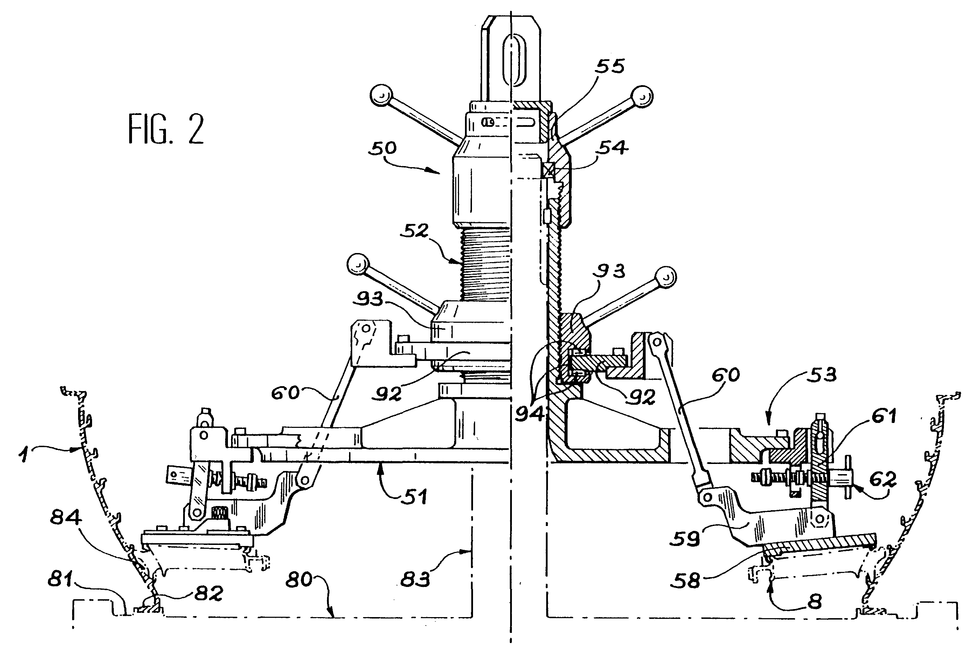

Le disque 46 est lié à un mandrin 44 qui s'élève au centre de celui-ci et autour duquel on enfile l'outil principal 50 qui va maintenant être décrit, tout d'abord d'après la figure 2. Cet outil principal 50 se compose essentiellement d'un plateau 51 circulaire au centre duquel s'élève un axe fileté 52 et qui porte autour de lui une série d'unité de montage 53 des secteurs 8, en nombre identique à ceux-ci. L'axe fileté 52 est creux et c'est lui qui est enfilé autour du mandrin 44, jusqu'à ce que ce dernier bute contre la bague interne d'un roulement à billes 54 disposée dans un écrou abaisseur 55 vissé au sommet de l'axe fileté 52.

La bague extérieure du roulement à billes 54 est fixée à l'écrou abaisseur 55. La rotation de l'écrou abaisseur 55 dans le sens voulu entraîne l'abaissement de l'axe fileté 52 et des unités de montage 53 vers les secteurs 8 du distributeur 4 : c'est précisément ce qui est entrepris pour saisir ces secteurs 8, l'outil principal 50 arrivant à la position esquissée à la figure 1. Les unités de montage 53 comprennent un support 58 de secteur 8 en forme de plateau et muni d'une nervure supérieure 59 à laquelle sont articulées une bielle de levage 60 et une bielle de recul 61 par lesquelles le support 58 est suspendu au plateau circulaire 51 et sa position est commandée. En effet, chaque bielle de levage 60 est articulée par son extrémité opposée et supérieure à une couronne 92 engagée dans un écrou de basculement 93 vissé comme l'écrou abaisseur 55 à l'axe fileté 52 ; la couronne 92 est logée dans l'écrou de basculement 93 par l'intermédiaire de patins et de roulements à aiguilles 94 qui lui permettent d'être indépendante en rotation de celui-ci : quand l'écrou de basculement 93 est tourné, il s'élève ou s'abaisse et entraîne la couronne 92 sans qu'elle tourne ; les bielles de levage 60 sont entraînées, ce qui provoque le basculement des supports 58.

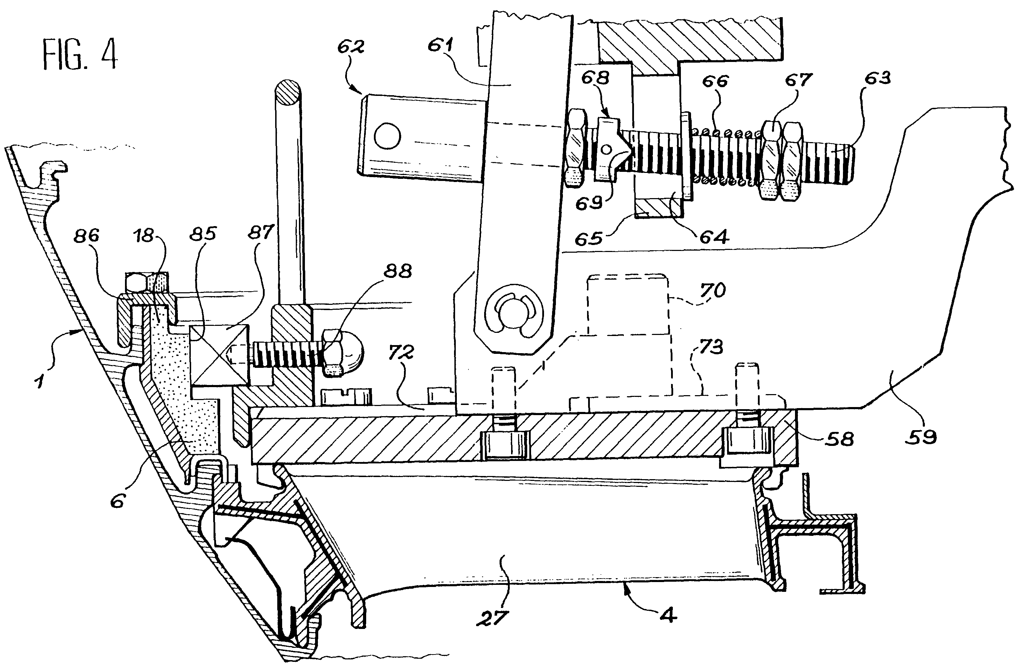

La bielle de recul 61 est directement articulée au plateau circulaire 51 par son extrémité supérieure ; elle lui est de plus unie par un mécanisme d'inhibition de rotation 62 (visible surtout à la figure 4) qui comprend principalement une tige 63 qui traverse la bielle de recul 61 et une fente allongée 64 établie à travers une oreille 65 formant une excroissance sous le plateau circulaire 51. Un ressort 66 est comprimé entre un épaulement 67 de la tige 63 et l'oreille 65 et tend à entraîner la tige 63 radialement vers l'intérieur. Cependant, ce mouvement est arrêté par une butée 68 de la tige 63, qui porte un couteau 69 allongé. Dans la position d'origine, la butée 68 est entièrement sortie de la fente 64, le couteau 69 est- perpendiculaire à elle et la coupe, son fil s'appuyant sur la face extérieure de l'oreille 59 ; le ressort 66 est fortement bandé et empêche la bielle de recul 61 de tourner ; enfin, l'écrou de basculement 93 est suffisamment levé pour que-le support 58 dans l'unité de montage 53 soit horizontal.

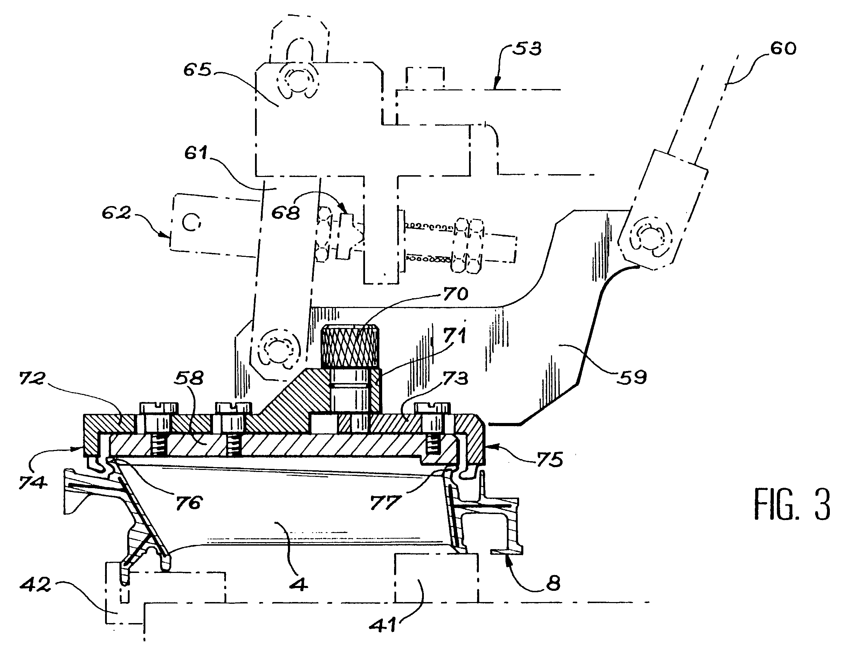

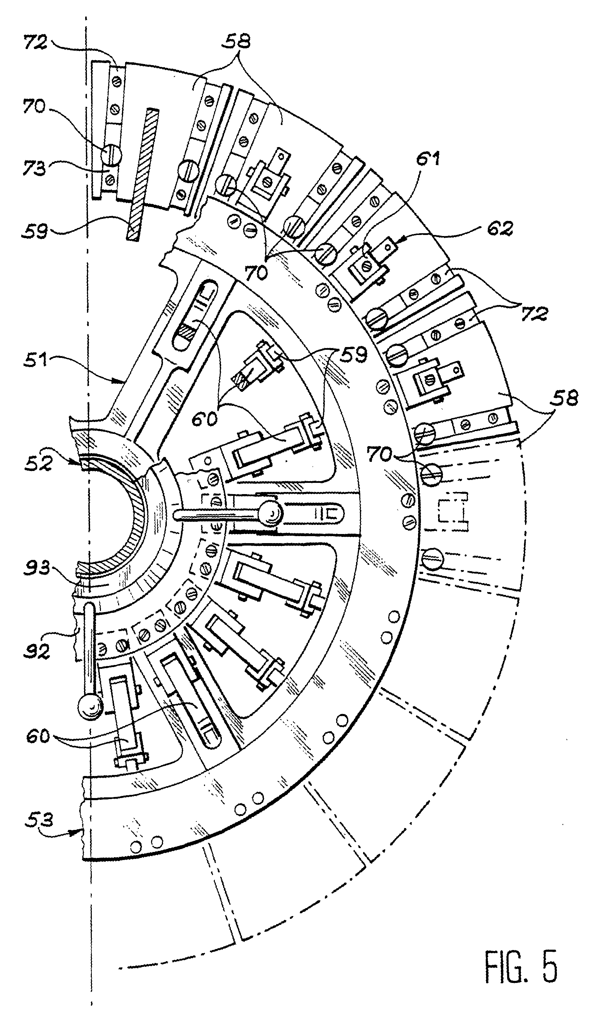

On abaisse alors le plateau central 51 et les unités de montage 53 jusqu'à ce que les supports 58, qui surplombent respectivement les secteurs 8, finissent par les toucher, ce qui donne l'état de la figure 3 ; on tourne alors les boutons de commande 70 d'une paire d'excentriques 71 situés sur les côtés de chacun des supports 58 (comme la figure 5 l'illustre) et dont l'effet de chacun est de rapprocher une paire de mâchoires 72 et 73 dont chacune se termine par un crochet 74 ou 75 qui s'étend par-devant le bord radial du support 58, jusqu'à hauteur de rebords supérieurs 76 et 77 des secteurs 8 : le mouvement de rapprochement des mâchoires 72 et 73 aboutit à l'engagement des extrémités des crochets 74 et 75 sous ces rebords 76 et 77 et donc à la saisie des secteurs 8 par les unités de montage 53 (esquissée à la figure 1). Les cales disposées entre les secteurs 8 peuvent alors être retirées et, après qu'on a relevé le plateau circulaire 51 et les unités de montage 53 par une rotation inverse de l'écrou abaisseur 55 pour soulever les secteurs 8 des couronnes 41 et 42, l'outil principal 50 est soulevé du mandrin 44 du plan de montage 40 et porté vers une autre partie de l'outillage, à savoir un socle 80 (illustré à la figure 2) composé d'un second disque 81 sur lequel le carter 1 est posé et d'un second mandrin 83 dressé au centre du disque 81 et sur lequel l'axe fileté 52 de l'outil principal 50 est enfilé, jusqu'à ce que le sommet du second mandrin 83 bute contre la bague interne du roulement 54, comme précédemment. Le carter 1 est posé par son extrémité avant effilée sur des surfaces d'appui et de centrage 82 du second disque 81, de sorte que son axe est vertical et que la gorge 84 de montage du distributeur 4, délimitée essentiellement par les lèvres 13 et 16 s'ouvre vers le haut. Comme le plateau circulaire 51 est alors relevé, le distributeur 4 surplombe la gorge de montage 84.

Le montage des secteurs 8 implique de descendre alors le plateau circulaire 51 et les unités de montage 53 par une rotation exercée sur l'écrou abaisseur 55, non sans avoir abaissé au préalable l'écrou de basculement 93 pour infliger une légère inclinaison (le bord radialement interne des secteurs 8 étant abaissé) aux secteurs 8 du distributeur 4, de 6° par exemple. De plus, on a tourné les tiges 63 d'un quart de tour pour relâcher les mécanismes d'inhibition d'articulation 62 : les couteaux 69 s'alignent avec les fentes 64, et y pénètrent sous l'action des ressorts 66 qui se détendent : les bielles de recul 61 subissent un basculement vers l'intérieur (radialement) qui fait reculer les supports 58 et accentue leur inclinaison. L'effet conjoint de ces deux basculements des supports 58 est de rapprocher les secteurs 8, du moins à l'endroit des seconds béquets 14, qui dessinent alors un cercle resserré, plus petit que l'ouverture des secondes lèvres 16, comme on le voit sur la moitié de droite de la figure 2. Il est alors possible de faire descendre les unités de montage 53 dans le carter 1 par une nouvelle rotation de l'écrou abaisseur 55, jusqu'à ce que les secteurs 8 passent dans l'ouverture des secondes lèvres 16 et que les premiers béquets 10, qui sont restés sensiblement au diamètre de montage malgré les basculements des supports 58, touchent les premières lèvres axiales 13.

L'écrou de basculement 63 est alors relevé le long de l'axe fileté 51, ce qui provoque le pivotement des secteurs 8 autour du premier béquet 10 et rapproche les seconds béquets 14 des secondes lèvres 16 jusqu'à ce que l'ajustement des surfaces radialement extérieures 19 sur la portée circulaire 20 soit réalisé, ce qu'on a esquissé sur la demi-vue de gauche de la figure 2. Il est alors possible d'installer la couche abradable 6 située -immédiatement en arrière et de bloquer le distributeur 4 par l'agrafe 22 (figure 4). De plus, un anneau de retenue 86 peut être installé temporairement autour de l'extrémité arrière 18 de cette couche abradable 6 pour la maintenir temporairement en place, jusqu'à ce que la roue de rotor 3 située devant ladite couche 6 soit montée, puis que l'outillage responsable de la mise en place du distributeur 4 suivant soit introduit.

Pour faciliter le placement de l'anneau de retenue 86, on conseille de disposer des patins 87 sur les unités de montage 53 ; ces patins 87 sont déployés radialement vers l'extérieur par des vis de pression 88 jusqu'à ce qu'ils butent contre la face interne 85 de la couche abradable 6, qui est alors fermement maintenue en place et ne risque pas de bouger quand l'anneau de retenu 86 est placé. Les patins 87 sont ensuite reculés, les mâchoires 74 et 75 desserrées des secteurs 8 et l'outil principal 50 peut être sorti du carter 1.

L'outillage décrit se prête aussi au démontage du même distributeur 8, par une suite d'opérations inverse à la précédente.

## Revendications

1. Outillage (40, 50, 80) de montage d'un distributeur (4) de turbomachine formé de secteurs (8) adjacents en arc de cercle, dans un carter (1) pourvu de deux logements annulaires (11, 33), un premier (11) des logements, situé d'un côté effilé du carter (1), étant délimité par une première lèvre (13) du carter, s'étendant axialement à l'opposé du côté effilé, un second (33) des logements, situé d'un côté épanoui du carter, étant délimité par une seconde lèvre (16) du carter s'étendant radialement vers l'intérieur, les secteurs (8) comprenant, sur une portion radialement extérieure, un premier béquet (10), s'engageant dans le premier logement (11) et s'étendant axialement vers le côté effilé quand le distributeur est monté dans le carter, et un second béquet (14), s'engageant dans le second logement (33) et s'étendant radialement vers l'extérieur quand le distributeur est monté dans le carter, l'outillage étant **caractérisé par** :
- un plateau circulaire (51),
- des unités de montage (53) des secteurs, associées respectivement aux secteurs (8) du distributeur et comprenant chacune :
• un support (58) de secteur,
• un mécanisme de suspension (60, 61) du support de secteur au plateau circulaire,
• et un mécanisme de commande de basculement (92, 93) du support de secteur, disposé entre le support de secteur et le plateau circulaire, permettant d'incliner le secteur (8) porté par le support.

2. Outillage selon la revendication 1, **caractérisé en ce que** le mécanisme de suspension comprend une paire de bielles articulées au support de secteur, l'une des bielles (61) étant aussi articulée au plateau circulaire (51) et l'autre des bielles (60) étant aussi articulée à un organe (92), commun à toutes les unités de montage, du mécanisme de commande de basculement.

3. Outillage selon la revendication 2, **caractérisé en ce que** le mécanisme de commande de basculement comprend un écrou (93) vissé sur un axe fileté (52) du plateau circulaire (51), et une couronne (92) tournant dans l'écrou (93) autour de l'axe fileté et constituant ledit organe.

4. Outillage selon l'une quelconque des revendications 1 à 3, **caractérisé en ce qu'**il comprend un plan (80) sur lequel le carter est posé et auquel le plateau circulaire (51) est suspendu par un mécanisme abaisseur (55).

5. Outillage selon les revendications 3 et 4, **caractérisé en ce que** le mécanisme abaisseur comprend un second écrou (55) vissé sur l'axe fileté (52) et posé sur un mandrin (83) du socle (80), l'axe fileté coulissant le long du mandrin.

6. Outillage selon la revendication 2, **caractérisé en ce que** les bielles (61) articulées au plateau circulaire (51) sont aussi reliées au plateau circulaire (51) par un mécanisme d'inhibition d'articulation (62) pouvant être relâché.

7. Outillage selon la revendication 6, **caractérisé en ce que** le mécanisme d'inhibition d'articulation est un mécanisme à détente et recul qui impose un basculement des bielles (61) radialement vers l'intérieur quand il est relâché.

8. Outillage selon l'une quelconque des revendications 1 à 7, **caractérisé en ce qu'**il comprend un anneau de retenue (86) de segments d'étanchéité (6) posés dans le carter près du distributeur et autour d'une roue (3) de rotor.

9. Outillage selon la revendication 8, **caractérisé en ce qu'**il comprend des patins (87), mobiles en direction radiale, pour plaquer les segments d'étanchéité (6) sur le carter (1).

10. Outillage selon l'une quelconque des revendications 1 à 9, **caractérisé en ce qu'**il comprend un plan de pose (40) des secteurs (8) de distributeur selon une disposition sensiblement identique à leur disposition de montage dans le carter (1).

## Patentansprüche

1. Werkzeug (40, 50, 80) zum Montieren eines von kreisbogenförmig aneinandergrenzenden Segmenten (8) gebildeten Leitrades (4) einer Turbomaschine in einem Gehäuse (1), das mit zwei ringförmigen Aufnahmen (11, 33) versehen ist, wobei eine erste Aufnahme (11), die sich auf einer sich verjüngenden Seite des Gehäuses (1) befindet, durch eine erste Lippe (13) des Gehäuses umgrenzt wird, die sich gegenüber der sich verjüngenden Seite axial erstreckt, wobei eine zweite Aufnahme (33), die sich auf einer ausgebauchten Seite des Gehäuses befindet, durch eine zweite Lippe (16) des Gehäuses umgrenzt wird, die sich radial nach innen erstreckt, wobei die Segmente (8) an einem radial außen liegenden Abschnitt eine erste Nase (10) aufweisen, die in der erste Aufnahme (11) in Eingriff kommt und sich axial zu der sich verjüngenden Seite hin erstreckt, wenn das Leitrad in dem Gehäuse eingebaut ist, und eine zweite Nase (14) aufweisen, die mit der zweiten Aufnahme (33) in Eingriff kommt und sich radial nach außen erstreckt, wenn das Leitrad in dem Gehäuse eingebaut ist,
**gekennzeichnet durch:**
- eine kreisförmige Platte (51),
- Montageeinheiten (53) für die Segmente, die mit den Segmenten (8) des Leitrades verbunden sind und jeweils aufweisen:
- einen Segment-Träger(58),
- einen Aufhängungsmechanismus (60, 61) für den Segment-Träger an der kreisförmigen Platte, und
- einen Steuermechanismus zum Kippen (92, 93) des Segment-Trägers, der zwischen dem Segment-Träger und der kreisförmigen Platte angeordnet ist und mit dem das von dem Träger gehaltene Segment (8) geneigt werden kann.

2. Werkzeug nach Anspruch 1,
**dadurch gekennzeichnet,**
**dass** der Aufhängungsmechanismus ein Paar Stangen umfasst, die an dem Segment-Träger angelenkt sind, wobei die eine dieser Stangen (61) außerdem an der kreisförmigen Platte (51) angelenkt ist, und die andere Stange (60) außerdem an einem Organ (92) des Steuermechanismus zum Kippen angelenkt ist, das allen Montageeinheiten gemeinsam ist.

3. Werkzeug nach Anspruch 2,
**dadurch gekennzeichnet,**
**dass** der Steuermechanismus zum Kippen aus einer auf eine Gewindeachse (52) der kreisförmigen Platte (51) aufgeschraubten Mutter (93) und einem in der Mutter (93) um die Gewindeachse drehenden Kranz (92) besteht, welcher das genannte Organ bildet.

4. Werkzeug nach einem der Ansprüche 1 bis 3,
**dadurch gekennzeichnet,**
**dass** es eine Ebene (80) aufweist, auf die das Gehäuse gesetzt wird und an der die kreisförmige Platte (51) mit einem Absenkmechanismus (55) aufgehängt ist.

5. Werkzeug nach den Ansprüchen 3 und 4,
**dadurch gekennzeichnet,**
**dass** der Absenkmechanismus (55) aus einer zweiten Mutter besteht, die auf die Gewindeachse (52) aufgeschraubt ist und auf einer Kernstange (83) des Sockels (80) sitzt, wobei die Achse entlang der Kernstange verschiebbar ist.

6. Werkzeug nach Anspruch 2,
**dadurch gekennzeichnet,**
**dass** die an der kreisförmigen Platte (51) angelenkten Stangen (61) auch durch einen lösbaren Gelenksperrmechanismus (62) mit der kreisförmigen Platte (51) verbunden sind.

7. Werkzeug nach Anspruch 6,
**dadurch gekennzeichnet,**
**dass** der Gelenksperrmechanismus (62) ein Mechanismus mit Auffederung und Zurückspringen ist, der ein Kippen der Stangen (61) in radialer Richtung nach innen bewirkt, wenn er freigegeben wird.

8. Werkzeug nach einem der Ansprüche 1 bis 7,
**dadurch gekennzeichnet,**
**dass** es einen Rückhaltering (86) für Dichtungssegmente (6) aufweist, die in dem Gehäuse nahe bei dem Leitrad und um ein Rotorrad (3) herum angeordnet sind.

9. Werkzeug nach Anspruch 8,
**dadurch gekennzeichnet,**
**dass** es Gleitschuhe (87) aufweist, die in radialer Richtung beweglich sind, um die Dichtungssegmente (6) an das Gehäuse (1) zu pressen.

10. Werkzeug nach einem der Ansprüche 1 bis 9,
**dadurch gekennzeichnet,**
**dass** es eine Montageebene (40) aufweist, auf der die Segmente (8) des Leitrades in einer Anordnung angebracht werden, die im wesentlichen identisch mit ihrer Einbau-Anordnung in dem Gehäuse (1) ist.

## Claims

1. Tooling (40, 50, 80) for assembling a turbomachine stator ring (4) formed of adjacent sectors (8) in the form of circular arcs, inside a casing (1) provided with two annular housings (11, 33), a first (11) of the housings, situated at a tapered side of the casing (1) being delimited by a first lip (13) of the casing, extending axially away from the tapered side, a second (33) of the housings, situated on a flared side of the casing, being delimited by a second lip (16) of the casing extending radially inwards, the sectors (8) comprising, on a radially outer portion, a first spoiler (10), which fits into the first housing (11) and extends axially towards the tapered side when the stator ring is mounted in the casing, and a second spoiler (14), which fits into the second housing (33) and extends radially outwards when the stator ring is mounted in the casing, the tooling being **characterized by**:
- a circular plate (51),
- sector mounting units (53) associated respectively with the sectors (8) of the stator ring and each comprising:
• a sector support (58),
• a mechanism (60, 61) for suspending the sector support from the circular plate,
• and a mechanism (92, 93) for controlling the tilting of the sector support, arranged between the sector support and the circular plate, allowing the sector (8) carried by the support to be inclined.

2. Tooling according to Claim 1, **characterized in that** the suspension mechanism comprises a pair of link rods articulated to the sector support, one of the link rods (61) also being articulated to the circular plate (51) and the other of the link rods (60) also being articulated to a member (92), common to all the mounting units, of the tilt-control mechanism.

3. Tooling according to Claim 2, **characterized in that** the tilt-control mechanism comprises a nut (93) screwed onto a threaded spindle (52) of the circular plate (51), and a ring (92) turning in the nut (93) about the threaded spindle and constituting the said member.

4. Tooling according to any one of Claims 1 to 3, **characterized in that** it comprises a plane (80) on which the casing is placed and from which the circular plate (51) is suspended by a lowering mechanism (55).

5. Tooling according to Claims 3 and 4, **characterized in that** the lowering mechanism comprises a second nut (55) screwed onto the threaded spindle (52) and placed over a mandrel (83) of the base (80), the threaded spindle sliding along the mandrel.

6. Tooling according to Claim 2, **characterized in that** the link rods (61) articulated to the circular plate (51) are also connected to the circular plate (51) by a releasable articulation-inhibiting mechanism (62).

7. Tooling according to Claim 6, **characterized in that** the articulation-inhibiting mechanism is a trigger and retreat mechanism which causes the link rods (61) to pivot radially inwards when it is released.

8. Tooling according to any one of Claims 1 to 7, **characterized in that** it comprises a retaining ring (86) for sealing rings (6) which are placed in the casing near the stator ring and around a rotor wheel (3).

9. Tooling according to Claim 8, **characterized in that** it comprises pads (87) that can move in the radial direction for pressing the sealing rings (6) against the casing (1).

10. Tooling according to any one of Claims 1 to 9, **characterized in that** it comprises a plane (40) on which the stator-ring sectors (8) are set down in an arrangement roughly identical to the arrangement in which they are assembled into the casing (1).
